# EUROPEAN PATENT APPLICATION

(11) **EP 4 040 112 A1**
(43) Date of publication of application: **10.08.2022**
(21) Application number: 22153462.1
(22) Date of filing: 26.01.2022
(51) Int. Cl.: G01C 21/16, G01C 21/30, G01C 21/36, G05D 1/02

(54) **LOCALIZATION DEVICE**

(30) Priority: 08.02.2021 JP 2021018184
(71) Applicant: TOYOTA JIDOSHA KABUSHIKI KAISHA, Toyota-shi, Aichi-ken, 471-8571 (JP)
(72) Inventor: IMAZU, Takanori, Toyota-shi, 471-8571 (JP)
(74) Representative: J A Kemp LLP

(57) **Abstract**

A localization device (100) configured to consecutively estimate a location of an own vehicle (1) based on behavior of the own vehicle (1) and configured to correct the estimated location by making reference to a landmark in a vicinity of the own vehicle (1) includes a calculation unit (15) configured to calculate an index related to a self-location based on a displacement error of the own vehicle (1) and a changing unit (15) configured to change a determination criterion for identifying the landmark based on the index.

## Description

### BACKGROUND OF THE INVENTION

### 1. Field of the Invention

The invention relates to a localization device configured for a vehicle to estimate a self-location.

### 2. Description of Related Art

For this type of device, for example, a device that identifies an object (hereinafter referred to as "landmark" as appropriate) in the vicinity of a vehicle and estimates the location of the vehicle based on the absolute coordinates of the identified object has been proposed (see Japanese Unexamined Patent Application Publication No. 2015-152991 (JP 2015-152991 A)).

### SUMMARY OF THE INVENTION

When a vehicle identifies a landmark, first, a location of one object detected by an in-vehicle camera or the like is estimated based on the current location of the vehicle (i.e., an estimated self-location). When an amount of deviation between the estimated location of the one object and the location of one landmark included in a database is equal to or smaller than a predetermined value, the one object is identified as the one landmark.

Now, a vehicle may be affected by disturbance such as unevenness of a road surface, wind, and so forth, for example. When the vehicle is affected by the disturbance, identifying a landmark may be difficult due to deviation between the estimated self-location and the actual location. That is to say, the amount of deviation between the estimated location of the object corresponding to one landmark and the location of the one landmark may be larger than the predetermined value, and identifying the landmark may be difficult. The technique described in the above JP 2015-152991 A has room for improvement with respect to this point.

The invention provides a localization device capable of appropriately estimating a self-location even when a vehicle is affected by the disturbance.

A first aspect of the invention is a localization device. The localization device is configured to consecutively estimate a location of an own vehicle based on behavior of the own vehicle, and that is configured to correct the estimated location by making reference to a landmark in a vicinity of the own vehicle. The localization device includes a calculation unit configured to calculate an index related to a self-location based on a displacement error of the own vehicle, and a changing unit configured to change a determination criterion for identifying the landmark based on the index.

In the first aspect, the localization device may include a detection unit configured to detect a location of the landmark via an external sensor configured to sense an environment in the vicinity of the own vehicle. The calculation unit may be configured to calculate the index based on an error related to location detection of the landmark by the detection unit, in addition to the displacement error.

In the first aspect, the localization device may include an identifying unit configured to identify the landmark by associating the landmark and a candidate corresponding to the landmark indicated in a database, when a difference between the location of the landmark and a location of the candidate is equal to or smaller than a threshold value indicated by the determination criterion. The changing unit may be configured to initialize the determination criterion when the landmark is identified by the identifying unit.

In the first aspect, the localization device may include an identifying unit configured to identify the landmark by associating the landmark and a candidate corresponding to the landmark indicated in a database, when a difference between the location of the landmark and a location of the candidate is equal to or smaller than a threshold value indicated by the determination criterion. The changing unit may be configured to decrease the threshold value when the landmark is identified by the identifying unit.

In the first aspect, the calculation unit may be configured to calculate displacement of the own vehicle from output of at least one sensor out of a wheel speed sensor, a steering angle sensor, a gyro sensor, and an acceleration sensor, as an internal sensor for sensing a state of the own vehicle.

According to the first aspect, the location of the vehicle can be appropriately estimated even when the vehicle is affected by disturbance.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram illustrating a concept of travel of a vehicle;
FIG. 2 is a diagram illustrating a concept of matching according to an embodiment;
FIG. 3 is a block diagram illustrating a configuration of a localization device according to the embodiment;
FIG. 4 is a flowchart showing operations of the localization device according to the embodiment;
FIG. 5A is a diagram showing an example of a relation between reliability and matching range; and
FIG. 5B is a diagram showing an example of the relation between reliability and matching range.

### DETAILED DESCRIPTION OF EMBODIMENTS

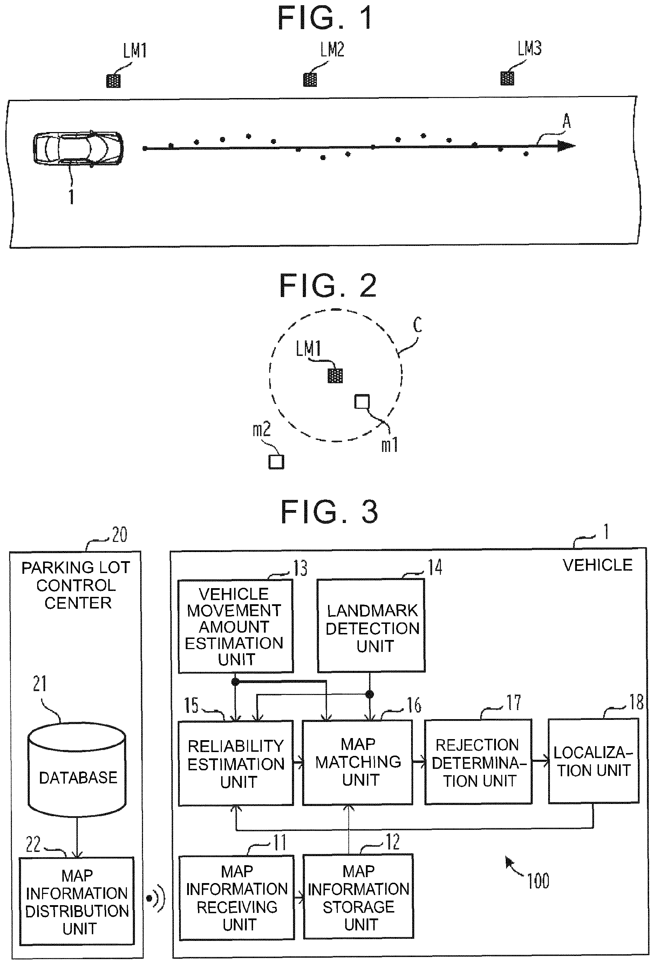

An embodiment relating to a localization device will be described with reference to FIGS. 1 through 4. Here, a localization device 100 that estimates a location of a vehicle 1 traveling autonomously in a parking lot by autonomous driving functions will be given as an example.

### Overview of Location Estimation

First, an overview of a method for estimating the location of the vehicle 1 by the localization device 100 according to the embodiment will be described with reference to FIGS. 1 and 2.

There are various forms of parking lots, such as flat parking lots, multi-story parking lots, underground parking lots, and so forth, for example. In the multi-story parking lots and the underground parking lots, reception of signals emitted from man-made satellites is difficult due to structures (e.g., pillars and ceilings), and accordingly positioning systems using the man-made satellites such as the Global Navigation Satellite System (GNSS) or the like cannot be used to accurately estimate the location of the vehicle 1.

Accordingly, the localization device 100 estimates the location of the vehicle 1 in the parking lot using dead reckoning that is a method of estimating the location based on the behavior of the vehicle 1. In the dead reckoning, displacement of the vehicle 1 in a very short period Δt is obtained, based on output of the internal sensor that senses the operating state (in other words, the behavior) of the vehicle 1. The location of the vehicle 1 after the very short period Δt is then estimated by adding the obtained displacement to the location of the vehicle 1 at the beginning of the very short period Δt.

Specifically, with the location of the vehicle 1 at the time T1 as (x₁, y₁), the location of the vehicle 1 after the very short period Δt1 has elapsed from the time T1 is expressed as (x₁ + Δxₜ₁, y₁ + Δyₜ₁) with the displacement of the vehicle 1 in the very short period Δt1 as (Δxₜ₁, Δyₜ₁). The location of the vehicle 1 further after a very short period Δt2 has elapsed following the very short period Δt1 is expressed as (x₁ + Δxₜ₁ + Δxₜ₂, y₁ + Δyₜ₁ + Δyₜ₂) with the displacement of the vehicle 1 in the very short period Δt2 as (Δxₜ₂, Δyₜ₂).

The displacement of the vehicle 1 obtained based on output of the internal sensor contains, for example, errors due to an error of the internal sensor, an error in the displacement calculation method, and so forth. Thus the error in the location of the vehicle 1 estimated by the dead reckoning increases over time.

Further, the vehicle 1 is affected by disturbances such as unevenness of a road surface, wind, and so forth, for example. In a case where the vehicle 1 is affected by the disturbances, even when calculation based on the output of the internal sensor indicates that the vehicle 1 is traveling straight, for example, the vehicle 1 may actually be deviating in the lateral direction. That is to say, the location of the vehicle 1 estimated by the dead reckoning may deviate from the actual location of the vehicle 1.

Accordingly, there is a possibility that the deviation between the location of the vehicle 1 estimated by the dead reckoning and the actual location of the vehicle 1 may increase over time. Hence, the localization device 100 corrects the location of the vehicle 1 estimated by the dead reckoning, by referencing a landmark of which the location (e.g., absolute coordinates) is known.

Specifically, an assumption will be made that the location of the vehicle 1 at the time T2 estimated by the dead reckoning is (x₁ + Δxₜ₁ + ... + Δxₜₙ, y₁ + Δyₜ₁ + ... + Δyₜₙ) with reference to the location (x₁, y₁) of the vehicle 1 at the time T1. On the other hand, when the landmark of which the location is (X, Y) is detected at the time T2, the localization device 100 obtains the location of the vehicle 1 with respect to the location (X, Y) of the landmark ("x₂, y₂" here). The localization device 100 corrects (in other words, replaces) the location of the vehicle 1 at the time T2 estimated by the dead reckoning, to the location of the vehicle 1 with respect to the location of the landmark (x₂, y₂).

Thus, the localization device 100 makes reference to the landmark and corrects the location of the vehicle 1 estimated by the dead reckoning, thereby suppressing increase in deviation between the estimated location of the vehicle 1 and the actual location of the vehicle 1. Note that the internal sensor may be at least one sensor out of a wheel speed sensor, a steering angle sensor, a gyro sensor, and an acceleration sensor.

In FIG. 1, arrow A indicates a planned travel route for the vehicle 1. Dots indicate an example of an actual trail of the vehicle 1. An assumption will be made that landmarks LM1, LM2 and LM3 are present in the vicinity of the travel route. In this case, as described above, the localization device 100 consecutively estimates the location of the vehicle 1 based on the output of the internal sensor (in other words, the behavior of the vehicle 1), and corrects the location of the vehicle 1 with reference to at least one of the landmarks LM1, LM2, and LM3. As a result, the vehicle 1 can autonomously travel along the planned travel route based on the location estimated by the localization device 100.

Now, a method of identifying a landmark will be described. The localization device 100 detects a location of a landmark via an external sensor that senses an environment in the vicinity of the vehicle 1, by a camera, a radar, LiDAR (Light Detection and Ranging), or the like, for example. The location of the landmark detected at this time is a relative location with reference to the location of the vehicle 1 estimated by the localization device 100. Various known arrangements are applicable to the method of detecting the location of the landmark via the external sensor, and accordingly detailed description thereof will be omitted.

The localization device 100 identifies one landmark corresponding to the detected landmark from a plurality of landmarks indicated in a database such as map information or the like, for example, based on the location of the detected landmark. Specifically, the localization device 100 first extracts information related to one or more landmarks existing in the vicinity of the vehicle 1 from the database, based on the location of the vehicle 1. Note that information related to the landmark includes, for example, the location of the landmark, identification information, and so forth. One or more landmarks from which information has been extracted will be referred to as "landmark candidates".

The localization device 100 then obtains a difference between the location of the detected landmark and the location of one or more landmark candidates (in other words, deviation amount). Subsequently, the localization device 100 compares this difference with a threshold value set in advance. At this time, the localization device 100 determines that the detected landmark and one landmark candidate correspond to each other when the difference is equal to or smaller than the threshold value. Conversely, the localization device 100 determines that the detected landmark and one landmark candidate do not correspond to each other when the difference is greater than the threshold value. The localization device 100 identifies one landmark corresponding to the detected landmark through such determination.

In the present embodiment, a situation in which the localization device 100 determines that the detected landmark and one landmark candidate correspond to each other will be referred to as "matching established", as appropriate. Also in the present embodiment, a situation in which the localization device 100 determines that the detected landmark and one landmark candidate do not correspond to each other will be referred to as "matching not established", as appropriate.

The above-described determination will be visually described with reference to FIG. 2. In FIG. 2, a range surrounded by a dashed-line circle C on which a landmark LM1 (corresponding to the above "landmark candidate") is centered, for example, corresponds to a range in which the difference is equal to or smaller than the threshold value (in other words, the magnitude of the radius of the dashed-line circle C corresponds to the magnitude of the threshold value). Accordingly, when the location of the landmark detected by the localization device 100 is within the dashed-line circle C, the difference can be said to be equal to or smaller than the threshold value.

Specifically, when the location of the landmark detected by the localization device 100 is the location indicated by sign m1 in FIG. 2, for example, the localization device 100 determines that the detected landmark and the landmark LM1 correspond to each other since the location indicated by the sign m1 is inside the dashed-line circle C. Conversely, when the location of the detected landmark is the location indicated by sign m2 in FIG. 2, the localization device 100 determines that the detected landmark and the landmark LM1 do not correspond to each other (i.e., recognizes the two as being different objects) since the location indicated by the sign m2 is outside of the dashed-line circle C. In the present embodiment, the range surrounded by the dashed-line circle C in FIG. 2 will be referred to as a "matching range", as appropriate.

As described above, the vehicle 1 is affected by disturbance. There are situations in which matching is not established between the landmark detected by the localization device 100 and the landmark indicated in the database and that should originally correspond to the detected landmark, due to disturbance. During a period in which matching is not established (in other words, a period in which the landmark is not identified), the location of the vehicle 1 estimated by the dead reckoning is not corrected. Accordingly, during the period in which matching is not established, the error in the estimated location of the vehicle 1 gradually increases.

Therefore, unless measures are taken, there is a possibility that the vehicle 1 may autonomously travel at a location significantly deviated from the planned travel route (see arrow A in FIG. 1), and there is a possibility that autonomous traveling itself may become difficult.

Accordingly, the localization device 100 calculates an index related to the location of the vehicle 1 (hereinafter referred to as "reliability" as appropriate), based on an error in displacement of the vehicle 1 estimated by the dead reckoning. The localization device 100 then changes the matching range (in other words, the above-described threshold value) based on the reliability. Specifically, the localization device 100 broadens the matching range as the reliability becomes lower (in other words, the above-described threshold value is increased, i.e., the threshold value is relaxed).

A configuration of the localization device 100 will now be described with reference to FIG. 3. In FIG. 3, the localization device 100 is configured to include a map information receiving unit 11, a map information storage unit 12, a vehicle movement amount estimation unit 13, a landmark detection unit 14, a reliability estimation unit 15, a map matching unit 16, a rejection determination unit 17, and a localization unit 18. The map information receiving unit 11, the map information storage unit 12, the vehicle movement amount estimation unit 13, the landmark detection unit 14, the reliability estimation unit 15, the map matching unit 16, the rejection determination unit 17, and the localization unit 18 may each be configured as a processing block that is logically realized, or may each be configured as a processing circuit that is physically realized. The map information receiving unit 11, the map information storage unit 12, the vehicle movement amount estimation unit 13, the landmark detection unit 14, the reliability estimation unit 15, the map matching unit 16, the rejection determination unit 17, and the localization unit 18 may each be composed of a microprocessor and memory storing programs, for example, and may function by the microprocessor executing the programs.

The map information receiving unit 11 is configured to be able to communicate with a parking lot control center 20. When the vehicle 1 parks in the parking lot, and when the vehicle 1 leaves the parking lot, the parking lot control center 20 transmits, to the localization device 100, at least part of a parking lot map stored in a database 21, and information related to a route that the vehicle 1 should travel (corresponding to the above-described "planned travel route"), via a map information distribution unit 22. Note that the parking lot map transmitted to the localization device 100 may include, for example, the location of each landmark (corresponding to the above-described "landmark candidate location"), vacancy information of each parking space, regulation information (e.g., one-way traffic, etc.), and so forth.

The map information receiving unit 11 receives the parking lot map and so forth transmitted from the parking lot control center 20. The map information storage unit 12 stores the parking lot map received by the map information receiving unit 11. The vehicle movement amount estimation unit 13 estimates the movement amount (in other words, the displacement) of the vehicle 1 in a very short period, based on the output of the internal sensor of the vehicle 1. Known technology can be applied to the method of estimating the movement amount of the vehicle 1, and accordingly detailed description thereof will be omitted. The landmark detection unit 14 detects the location of a landmark (e.g., the relative location of the landmark as to the vehicle 1) via the external sensor of the vehicle 1.

The reliability estimation unit 15 calculates the reliability. Specifically, each time the vehicle movement amount estimation unit 13 estimates the movement amount of the vehicle 1, the reliability estimation unit 15 acquires errors related to estimation (e.g., an error of the internal sensor, an error in the estimation method, etc.). Also, each time the landmark detection unit 14 detects the landmark, the reliability estimation unit 15 acquires errors related to detection (e.g., an error of the external sensor, an error in the detection method, etc.). The reliability estimation unit 15 then obtains error variance from the distribution of error values of the acquired errors. The reliability estimation unit 15 calculates the reliability based on the obtained error variance. The "reliability" here is assumed to decrease in proportion with an increase in the error variance.

The reliability estimation unit 15 further sets a matching range (i.e., the above-described threshold value) based on the calculated reliability. Specifically, the reliability estimation unit 15 sets the matching range such that the lower the calculated reliability is, the broader the matching range is, in other words, such that the higher the calculated reliability is, the narrower the matching range is. The reliability estimation unit 15 transmits the set matching range to the map matching unit 16. The degree to which the matching range is changed based on the reliability may be set as appropriate, taking into consideration, for example, the specifications of the localization device 100, intervals at which landmarks are laid out, and so forth. Also, the reliability estimation unit 15 updates the location of the vehicle 1, based on the location of the vehicle 1 estimated last time and the movement amount estimated this time by the vehicle movement amount estimation unit 13.

Based on the updated location of the vehicle 1, the map matching unit 16 converts the location of the landmark detected by the landmark detection unit 14 into absolute coordinates, or converts the location of the landmark included in the map information into relative coordinates as to the vehicle 1. Thereafter, the map matching unit 16 determines whether the difference between the location of the landmark detected by the landmark detection unit 14 and the location of the landmark included in the map information is equal to or smaller than a threshold value that corresponds to the matching range set by the reliability estimation unit 15.

The rejection determination unit 17 determines whether to reject the detection results by the landmark detection unit 14, based on the matching results of the map matching unit 16. Specifically, when the map matching unit 16 determines that the difference is greater than the threshold value, the rejection determination unit 17 determines that the detection results by the landmark detection unit 14 are to be rejected. The reason thereof is that, in this case, matching is not established, and accordingly the landmark detected by the landmark detection unit 14 is not identified. That is to say, the landmark detected by the landmark detection unit 14 is unusable for estimating the location of the vehicle 1.

When the rejection determination unit 17 determines that the detection results by the landmark detection unit 14 are to be rejected, the localization unit 18 estimates the location of the vehicle 1, based on the movement amount of the vehicle 1 estimated by the vehicle movement amount estimation unit 13 (in other words, by the dead reckoning). On the other hand, when the rejection determination unit 17 determines that the detection results by the landmark detection unit 14 are not to be rejected, the localization unit 18 references the detection results by the landmark detection unit 14 (i.e., the landmark detected by the landmark detection unit 14), and estimates (corrects) the location of the vehicle 1.

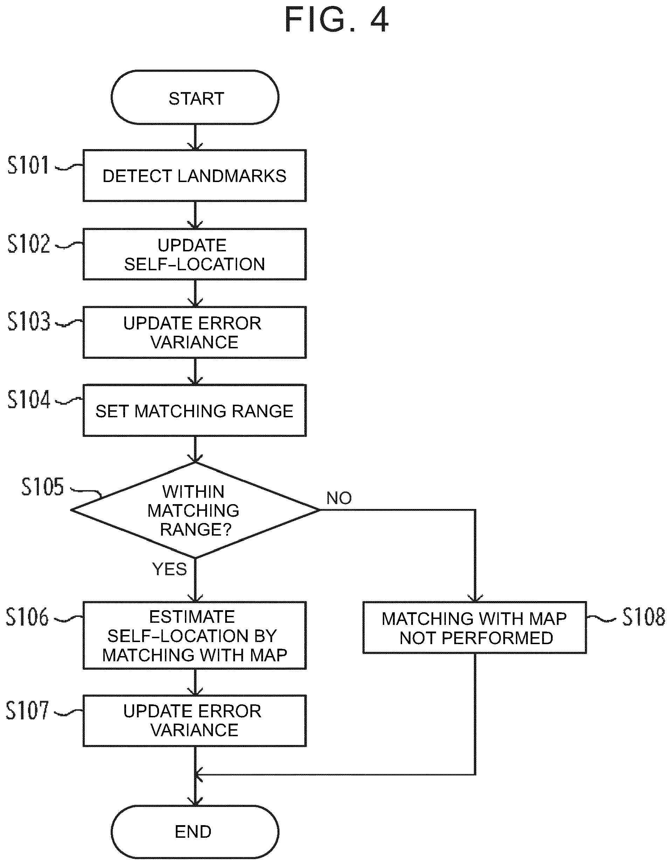

Next, operations of the localization device 100 will be described with reference to a flowchart in FIG. 4. In FIG. 4, the landmark detection unit 14 detects locations of landmarks in the vicinity of the vehicle 1 (step S101). In parallel with, or before and after the processing of step S101, the reliability estimation unit 15 updates the location of the vehicle 1, based on the movement amount of the vehicle 1 estimated by the vehicle movement amount estimation unit 13 (step SI02).

The reliability estimation unit 15 updates the error variance in parallel with the processing in step S102 (step S103). The reliability estimation unit 15 calculates the reliability based on the updated error variance. The reliability estimation unit 15 then sets the matching range based on the reliability (step S104).

The map matching unit 16 determines whether the landmark detected by the landmark detection unit 14 is within the matching range (see FIG. 2) relating to one landmark candidate indicated in the map information (step S105). That is to say, in the processing of step S105, the map matching unit 16 determines whether the difference between the location of the detected landmark and the location of the one landmark candidate is equal to or smaller than the threshold value corresponding to the matching range.

In the processing of step S105, when determination is made that the detected landmark is within the matching range, that is to say, when matching is established (Yes in step S105), the localization unit 18 performs matching with the map information, and estimates the location of the vehicle 1 (step S106). In the processing of step S106, the localization unit 18 replaces the location of the detected landmark with the location indicated in the map information of the corresponding (in other words, the matching-established) landmark, for example, and estimates the location of the vehicle 1 as to the landmark.

Thereafter, the reliability estimation unit 15 updates the error variance (step S107). Specifically, the reliability estimation unit 15 obtains the error variance only from errors related to detection results obtained when the landmark detection unit 14 detects the landmark this time. The reliability estimation unit 15 then replaces (i.e., updates) the error variance updated in the processing of step S103 with the obtained error variance.

In the processing of step S 105, when determination is made that the detected landmark is not within the matching range, that is to say, when matching is not established (No in step S 105), the localization unit 18 estimates the location of the vehicle 1 by the dead reckoning, without referring to the map information (in other words, the landmark) (step S108).

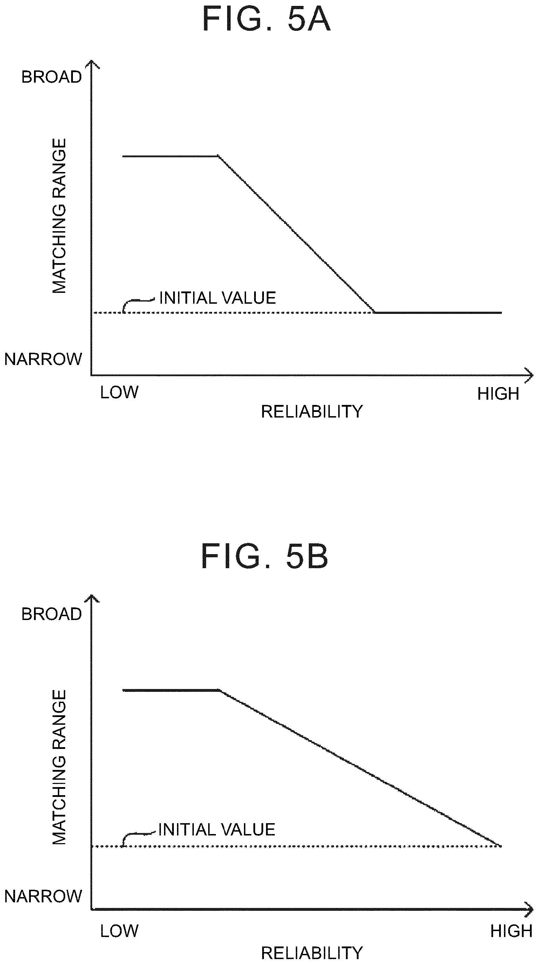

Now, the relation between the reliability and the matching range will be described with reference to FIGS. 5A and 5B. When the relation between the reliability and the matching range is a relation in which the matching range is maintained at the initial value until the reliability decreases to some extent, as shown in FIG. 5A for example, and the error variance is updated in the processing of step S107, the matching range when the location of the vehicle 1 is estimated next time may be the initial value. That is to say, when the landmark detected by the landmark detection unit 14 is identified, the matching range may be initialized.

Alternatively, when the relation between the reliability and the matching range is a relation as shown in FIG. 5B, for example, the matching range when the location of the vehicle 1 is estimated next time becomes smaller in accordance with the error variance updated in the processing of step S107. That is to say, when the landmark detected by the landmark detection unit 14 is identified, the matching range is narrowed.

From the perspective of suppressing erroneous identification of landmarks, an upper limit value is preferably set for the matching range, as shown in FIGS. 5A and 5B.

### Technical Effects

In the localization device 100, the matching range is changed based on the reliability. Accordingly, when the error variance increases (i.e., reliability decreases) because matching is not established, the matching range is broadened. Thus, even when the amount of deviation between the location of the landmark detected by the landmark detection unit 14 and the location of the corresponding landmark indicated in the map information is relatively great, matching is more readily established (i.e., the landmark is easier to be identified). As a result, even when the vehicle 1 is autonomously traveling at a location relatively deviated from the planned travel route (see arrow A in FIG. 1, for example) due to disturbance, the vehicle 1 can be restored to the above travel route. That is to say, according to the localization device 100, the location of the vehicle 1 can be appropriately estimated even when the vehicle 1 is affected by disturbance.

The landmarks described above may be, for example, augmented reality (AR) markers. Patterns that appear in the AR markers are clearly different from patterns that exist in the natural world (e.g., straight lines), and accordingly, erroneous detection of landmarks can be suppressed as compared to when line segments, such as for example, parking space boundary lines, stop lines, and so forth, are employed as landmarks. In addition, the AR markers have a relatively high degree of freedom in layout thereof, which is very advantageous in practical use.

Various aspects of the invention derived from the embodiment described above will be described below.

The localization device according to one aspect of the invention consecutively estimates a location of an own vehicle based on behavior of the own vehicle, and corrects the estimated location by making reference to a landmark in the vicinity of the own vehicle. The localization device includes a calculation unit that calculates an index related to a self-location based on a displacement error of the own vehicle, and a changing unit that changes a determination criterion for identifying the landmark based on the index.

In the above-described embodiment, the "reliability estimation unit 15" is equivalent to an example of the "calculation unit" and the "changing unit". In the above-described embodiment, the "reliability" is equivalent to an example of the "index related to a self-location", and the "matching range" is equivalent to an example of the "determination criterion".

The localization device may further include a detection unit that detects a location of the landmark via an external sensor that senses an environment in the vicinity of the own vehicle, and the calculation unit may calculate the index based on an error related to location detection of the landmark by the detection unit, in addition to the displacement error. In the above-described embodiment, the "landmark detection unit 14" is equivalent to an example of the "detection unit".

The localization device may include an identifying unit that identifies the landmark by associating the landmark and a candidate corresponding to the landmark indicated in a database when a difference between the location of the landmark and a location of the candidate is equal to or smaller than a threshold value indicated by the determination criterion, and the changing unit may initialize the determination criterion when the landmark is identified by the identifying unit. In the above-described embodiment, the "map matching unit 16" is equivalent to an example of the "identifying unit", and the "map information" is equivalent to an example of the "database".

The localization device may include an identifying unit that identifies the landmark by associating the landmark and a candidate corresponding to the landmark indicated in a database when a difference between the location of the landmark and a location of the candidate is equal to or smaller than a threshold value indicated by the determination criterion, and the changing unit may decrease the threshold value when the landmark is identified by the identifying unit.

The calculation unit may calculate displacement of the own vehicle from output of at least one sensor of a wheel speed sensor, a steering angle sensor, a gyro sensor, and an acceleration sensor, as an internal sensor for sensing a state of the own vehicle.

The invention is not limited to the above embodiment, and can be modified as appropriate within a scope not contrary to the essence or spirit of the invention that can be understood from the claims and the entire specification, and a localization device with such modifications is also included in the technical scope of the invention.

## Claims

1. A localization device (100) configured to consecutively estimate a location of an own vehicle (1) based on behavior of the own vehicle (1), and configured to correct the estimated location by making reference to a landmark in a vicinity of the own vehicle (1), the localization device (100) comprising:
a calculation unit (15) configured to calculate an index related to a self-location based on a displacement error of the own vehicle (1); and
a changing unit (15) configured to change a determination criterion for identifying the landmark based on the index.

2. The localization device (100) according to claim 1, further comprising a detection unit (14) configured to detect a location of the landmark via an external sensor configured to sense an environment in the vicinity of the own vehicle (1), wherein
the calculation unit (15) is configured to calculate the index based on an error related to location detection of the landmark by the detection unit (14), in addition to the displacement error.

3. The localization device (100) according to claim 2, further comprising an identifying unit (16) configured to identify the landmark by associating the landmark and a candidate corresponding to the landmark indicated in a database, when a difference between the location of the landmark and a location of the candidate is equal to or smaller than a threshold value indicated by the determination criterion, wherein
the changing unit (15) is configured to initialize the determination criterion when the landmark is identified by the identifying unit (16).

4. The localization device (100) according to claim 2, further comprising an identifying unit (16) configured to identify the landmark by associating the landmark and a candidate corresponding to the landmark indicated in a database, when a difference between the location of the landmark and a location of the candidate is equal to or smaller than a threshold value indicated by the determination criterion, wherein
the changing unit (15) is configured to decrease the threshold value when the landmark is identified by the identifying unit (16).

5. The localization device (100) according to any one of claims 1 to 4, wherein the calculation unit (15) is configured to calculate displacement of the own vehicle (1) from output of at least one sensor out of a wheel speed sensor, a steering angle sensor, a gyro sensor, and an acceleration sensor, as an internal sensor for sensing a state of the own vehicle (1).
